# EUROPÄISCHE PATENTANMELDUNG

(11) **EP 3 708 997 A1**
(43) Veröffentlichungstag der Anmeldung: **16.09.2020**
(21) Anmeldenummer: 19161976.6
(22) Anmeldetag: 11.03.2019
(51) Int. Cl.: G01N 13/02

(54) **VORRICHTUNG SOWIE VERFAHREN ZUR MESSUNG VON PROBENPARAMETERN WÄHREND EINES EINBETTVORGANGS IN EINEN EINBETTWERKSTOFF**

(71) Anmelder: TEXTECHNO HERBERT STEIN GMBH & CO. KG, 41066 Mönchengladbach (DE)
(72) Erfinder: Fliescher, Stefan, 41066 Mönchengladbach (DE); Steiger, Florian, 41066 Mönchengladbach (DE); Poitzsch, Claudia, 41066 Mönchengladbach (DE); Mörschel, Ulrich, 41066 Mönchengladbach (DE)
(74) Vertreter: dompatent von Kreisler Selting Werner - Partnerschaft von Patent- und Rechtsanwälten mbB

(57) **Zusammenfassung**

Vorrichtung zur Messung von Probenparametern während eines Einbettvorgangs in einem Einbettwerkstoff mit einem Probenhalter zur Halterung einer Probe, insbesondere einer Einzelfaser, mit einer Probenlängsachse, einem Tiegel zur Bereitstellung eines Einbettwerkstoffes, und einer ersten Antriebseinrichtung, mittels derer der Abstand zwischen Probe und Tiegel von einer ersten Position, in welcher die Probe einen Abstand zu dem Einbettwerkstoff aufweist, in eine Einbettposition, in welcher die Probe eine spezifizierte Eintauchtiefe im Einbettwerkstoff aufweist, und umgekehrt, veränderbar ist.

## Beschreibung

Die vorliegende Erfindung betrifft ein Verfahren sowie eine Vorrichtung zur Messung von Probenparametern während eines Einbettvorgangs.

Aus dem Stand der Technik, wie beispielsweise der NPL1, ist es bereits bekannt geworden, Messungen von Probenparametern während eines Einbettvorgangs einer Probe in Form einer Einzelfaser in einem Einbettwerkstoff durchzuführen.

Die NPL1 befasst sich mit der Charakterisierung der Benetzungseigenschaften einer Polymerschmelze als Einbettwerkstoff, in welche Einzelfasern zum Einbetten eingetaucht werden, um aus den gemessenen Probenparametern die Anbindungseigenschaften an der Grenzfläche zwischen Faser und dem Einbettwerkstoff zu berechnen. Hierzu beschreibt die NPL1 eine Vorrichtung mit einem Probenhalter zur Halterung einer Probe, insbesondere für eine Einzelfaser, wie beispielsweise einer Glasfaser, mit einer Faserlängsachse als Probenlängsachse sowie einem Tiegel, in welchem ein Einbettwerkstoff in Form einer Polymerschmelze bereitgestellt wird. Dabei ist es aus der NPL1 bekannt, mittels einer ersten Antriebseinrichtung die Probe relativ zu dem Tiegel von einer Ausgangsposition, in welcher die Probe einen Abstand zu dem Einbettwerkstoff aufweist, in eine Einbettposition, in welcher die Probe eine spezifizierte Eintauchtiefe im Einbettwerkstoff aufweist, zu verlagern. Gemäß NPL1 ist es dabei vorgesehen, die Benetzungseigenschaften zwischen Faser und Matrixwerkstoff mittels einer Mikrobalancewaage zu messen. Hierbei werden die während des Eintauchvorgangs der Faser in die Matrix auftretenden dynamischen Kräfte gemessen, woraus mittelbar die Benetzungseigenschaften der untersuchten Kombination zwischen Faser und Einbettwerkstoff berechnet werden.

NPL1: NYGÄRD, et al., (2002) "Wetting kinetics and adhesion strength between polypropylene melt and glass fibre: influence of chemical reactivity and fibre roughness", Journal of Adhesion Science and Technology, 16:13, 1781-1808, DOI: 10.1163/156856102320396148

Nachteilig an den Vorrichtungen und Verfahren aus dem vorbekannten Stand der Technik ist zunächst, dass die Benetzungseigenschaften lediglich mittelbar über die Messung der während des Benetzungsvorgangs auftretenden Kräfte ermittelt werden können. Hierbei ist es erforderlich, weitere Probenparameter messtechnisch zu ermitteln, aus denen zusammen mit den gemessenen Kräften die gewünschten Eigenschaften berechnet werden können. Diese weiteren Probenparameter, wie insbesondere der Probendurchmesser, können nicht innerhalb der bekannten Messvorrichtung ermittelt werden, sondern erfordern die Nutzung weiterer Vorrichtungen. Weiterhin nachteilig an den bekannten Vorrichtungen aus dem Stand der Technik ist, dass die bisherigen Messvorrichtungen höchst temperaturanfällig sind, da die Messung anhand der Ermittlung von Kräften erfolgt, welche im Bereich weniger Mikronewton liegen. Insbesondere bei der Durchführung und Charakterisierung von Einbettvorgängen, bei welchen die zu untersuchenden Einbettwerkstoffe aufgeschmolzen werden müssen, wie insbesondere thermoplastische Einbettwerkstoffe, ist es erforderlich, den Bereich des aufzuheizenden Tiegels, in welchen der flüssige Einbettwerkstoff bereitgestellt wird, gegenüber der sonstigen Messvorrichtung temperaturtechnisch zu isolieren. Hierzu ist es aus dem Stand der Technik bekannt, zusätzlich aktive Kühlvorrichtungen vorzusehen, um einen Temperatureinfluss auf die vorgesehene Messvorrichtung auszuschließen.

Ausgehend von dem bekannten Stand der Technik ist es die Aufgabe der vorliegenden Erfindung, die bekannten Verfahren und Vorrichtungen zur Ermittlung von Probenparametern, wie insbesondere von Einzelfasern, dahingehend zu verbessern, deren Messgenauigkeit weiter zu erhöhen sowie deren Abhängigkeit von äußeren Einflüssen zu reduzieren, als auch weiterhin den messtechnischen Aufbau der Vorrichtungen zu vereinfachen.

Die erfindungsgemäße Vorrichtung zur Messung von Probenparametern während eines Einbettvorgangs in einem Einbettwerkstoff ist dadurch gekennzeichnet, dass die Vorrichtung weiterhin eine erste elektronische Bildsensoreinheit und eine Auswerteeinrichtung umfasst, wobei die erste elektronische Bildsensoreinrichtung zur Aufnahme mindestens eines Bildes des Kontaktbereiches zwischen Probe und Einbettwerkstoff, insbesondere der Probe und/oder des Einbettwerkstoffes selbst, angeordnet ist und an die Auswerteeinrichtung mindestens eines der generierten Bilder überträgt und die Auswerteeinrichtung aus dem mindestens einen Bild Probenparameter ermittelt.

Als Probenparameter können erfindungsgemäß insbesondere die Abmessungen einer Probe, wie beispielsweise der Probendurchmesser bei einer Probe mit einem im Wesentlichen runden Querschnitt sowie die Eintauch- bzw. Eindringtiefe der Probe in den Einbettwerkstoff, ermittelt werden. Weiterhin können als Probenparameter auch der Benetzungswinkel des Einbettwerkstoffes sowie die Meniskushöhe des Einbettwerkstoffes gegenüber der umgebenden Oberfläche des Einbettwerkstoffes bzw. gegenüber der Oberfläche des Einbettwerkstoffes vor Einbettung der Probe gemessen werden. Folglich werden im Rahmen der vorliegenden Anmeldung als Probenparameter nicht nur die Charakteristika der Probe selber, sondern vielmehr auch die Eigenschaften des Einbettwerkstoffes bezeichnet. Insbesondere kann auch die Oberfläche des Einbettwerkstoffes und spezifisch deren Lage über den Einbett- bzw. Aushärtvorgang anhand der generierten Bilder zeitaufgelöst beobachtet werden.

Die Auswerteeinrichtung kann dabei einen Teil der eigentlichen Vorrichtung bilden und somit in diese integriert sein, die Auswerteeinrichtung wird jedoch üblicherweise räumlich getrennt zu den übrigen Anteilen der Messvorrichtung ausgeführt, wobei die Auswerteeinrichtung über eine geeignete Datentransferleitung mit den übrigen Anteilen der Messvorrichtung, wie insbesondere der ersten elektronischen Bildsensoreinheit, verbunden ist. Eine derartige Datenverbindung kann beispielsweise mittels handelsüblicher USB-Kabel und/oder Netzwerkkabel ausgestaltet werden. Die Datenverbindung kann jedoch auch kabellos, insbesondere über Funkwellen unter Vorsehung von entsprechenden Sende- und Empfangseinrichtungen, ausgestaltet werden.

Bei der Auswerteeinrichtung kann es sich um einen handelsüblichen Computer, insbesondere um einen Laptop, handeln, auf dem entsprechende Computerprogramme mit Auswertungsalgorithmen zur Auswertung des mindestens einen übertragenen Bildes und Ermittlung der Probenparameter ablaufen.

In den Auswertungsalgorithmen können insbesondere Bildverarbeitungsalgorithmen zum Einsatz kommen, mittels derer die Kanten der Probe und/oder des Einbettwerkstoffes und deren Grenzflächen identifiziert und ausgewertet werden können. Derartige gemeinfreie Algorithmen sind beispielsweise aus dem Programmpaket "Image J" oder beispielsweise aus der "ImgLib2" bekannt geworden.

Tobias Pietzsch, Stephan Preibisch, Pavel Tomančák, Stephan Saalfeld; ImgLib2-generic image processing in Java, Bioinformatics, Volume 28, Issue 22, 15 November 2012, Pages 3009-3011, https://doi.org/10.1093/bioinformatics/bts543

Wenn nunmehr weiterhin eine skalenmäßige Kalibrierung der generierten Bilder im Sinne einer Zuordnung von Probenabmessungen je Pixel des generierten Bildes, beispielsweise über eine Datenbank oder alternativ über eine initiale manuelle Kalibrierung, vorgenommen wird, können mittels der Algorithmen über die Auswerteeinrichtung aus den Abmessungen und Abständen der detektierten Grenzflächen der Probe und/oder des Einbettungsmittels die spezifischen Probenparameter, wie insbesondere ein Probendurchmesser und/oder Kontaktwinkel, zwischen Probenkörper und Einbettwerkstoff ermittelt werden.

Die Auswerteeinrichtung kann alternativ oder in Kombination zu den vorbeschriebenen Auswertungsalgorithmen eine Datenbank an Referenzbilddateien und zugeordneter zuvor ermittelter Probenparameter aufweisen, mit denen die generierten Bilder der ersten elektronischen Bildsensoreinheit verglichen werden, um aus dem Vergleich der generierten Bilder zu den Referenzbildern die real vorliegenden Probenparameter zu ermitteln.

Bevorzugt kann die erste Antriebseinrichtung derart angeordnet werden, dass mittels dieser die Probe bzw. die Faser relativ tief zu dem Einbettwerkstoff verlagerbar ist. Dazu kann die Auswerteeinrichtung per Datenverbindung mit den Antriebseinrichtungen der Vorrichtung verbunden sein, um die Bewegungsachsen bei Vorsehung entsprechender Stellantriebe automatisiert in Abhängigkeit der aufgenommenen Bilder anzusteuern.

Es kann dabei ebenfalls vorgesehen sein, die erste Antriebseinrichtung manuell auszugestalten, in der Art, dass eine Veränderung des Abstands zwischen Probe und Einbettwerkstoff beispielsweise über ein Drehrad oder über eine Anordnung nach Art einer Mikrometerschraube manuell erfolgen kann.

Die Verlagerung der Probe relativ zu dem Einbettwerkstoff mittels der ersten Antriebseinrichtung erfolgt bevorzugt in Richtung der Probenlängsachse.

Bevorzugt kann die optische Achse der ersten elektronischen Bildsensoreinheit derart ausgerichtet werden, dass diese in Bezug auf die Längsachse der Probe einen Winkel im Bereich von 90° +/- 30°, besonders bevorzugt von 90° +/- 15° einschließt. Der Ausrichtungswinkel von 90° stellt dabei die optimale Ausrichtung der ersten elektronischen Bildsensoreinheit dar, da das generierte Bild dann unmittelbar eine zweidimensionale Abbildung des Kontaktbereiches zwischen Probe und Einbettwerkstoff ohne Winkelverzerrungen darstellt. Es können ebenfalls von 90° abweichende Winkel vorgesehen werden, wobei dann in den generierten Bildern mittels der Auswerteeinrichtung die Verzerrungen aufgrund des Abbildungswinkels zur Ermittlung der Probenparameter herausgerechnet werden müssen.

Die optische Achse der ersten elektronischen Bildsensoreinheit ist auf den Kontaktbereich zwischen Probe und Einbettwerkstoff ausgerichtet, besonders bevorzugt ist diese derart ausgerichtet, dass das Zentrum des erzeugten Bildes des ersten elektronischen Bildsensors den Kontaktbereich zwischen Probe und Einbettwerkstoffzentrum darstellt. Besonders bevorzugt kann die optische Achse der ersten elektronischen Bildsensoreinheit auf den initialen Kontaktpunkt zwischen Probe und Einbettwerkstoff während des Einbettvorgangs ausgerichtet sein.

Als initialer Kontaktpunkt im Sinne der vorliegenden Anmeldung wird der Ort bezeichnet, an welchem bei Annäherung der Probe an den Einbettwerkstoff die Probe erstmalig die Flüssigkeitsoberfläche des flüssigen Einbettwerkstoffes berührt bzw. kontaktiert.

Der Kontaktbereich zwischen Probe und Einbettwerkstoff stellt den Ortsbereich während des gesamten Einbettvorgangs dar, an welchem ein Kontakt zwischen der Probenkörperoberfläche und dem Einbettwerkstoff stattfindet.

Die erste elektronische Bildsensoreinheit wird durch einen elektronischen Bildsensor zur Generierung eines zweidimensionalen Bildes und eine optionale, dem Bildsensor vorgelagerte, Optik gebildet. Bei dem elektronischen Bildsensor kann es sich beispielsweise um einen CCD- oder um einen CMOS-Sensor bzw. insbesondere auch um einen Laserscanner handeln.

Die erste elektronische Bildsensoreinheit kann weiterhin eine zusätzliche Antriebseinrichtung aufweisen, mittels derer der Bildsensor und/oder die vorgelagerte Optik im Wesentlichen entlang der optischen Achse der Bildsensoreinheit bewegbar ist, so dass der erste elektronische Bildsensor und/oder die Optik in Richtung des aufzunehmenden Kontaktbereiches zwischen Probe und Einbettwerkstoff hin- und wegbewegbar ist. Die Verlagerung mittels der weiteren Antriebseinrichtung kann dabei auch manuell beispielsweise über ein Drehrad durch einen Benutzer erfolgen. Insbesondere können die mittels der ersten elektronischen Bildsensoreinheit aufgenommen Bilder für einen Benutzer der Messvorrichtung auf einem Bildschirm, insbesondere über einen Bildschirm der Auswerteinrichtung, wiedergegeben werden, so dass der Benutzer mittels Drehrad oder elektronisch den ersten elektronischen Bildsensor beispielsweise auf den gewünschten Fokusbereich einstellen kann. Durch die manuelle Verstellung wird eine direkte Eingriffsmöglichkeit für einen Benutzer der Vorrichtung geschaffen, womit dieser sicherstellen kann, dass die aufgenommenen Bilder den gewünschten Fokusbereich und damit die gewünschte Bildschärfe aufweisen.

In einer bevorzugten Ausführungsform kann es jedoch auch alternativ zu der vorbeschriebenen manuellen Verstellung der elektronischen Bildsensoreinheit vorgesehen sein, dass die Verlagerung im Sinne einer Autofocus-Funktion erfolgt. Dabei kann es vorgesehen sein, dass in der elektronischen Bildsensoreinheit unmittelbar oder in der Auswerteeinrichtung eine entsprechende Autofokussiereinrichtung vorgesehen ist, welche die Verschiebung der elektronischen Bildsensoreinheit bewirkt. Die Autofokussiereinrichtung weist den Vorteil auf, dass die Vorrichtung vollautomatisiert ausgestaltet werden kann und es keinen Benutzereingriff im Sinne einer manuellen Fokussierung bedarf, es kann jedoch vorzugsweise zusätzlich zu der automatischen Fokussierung eine manuelle Nachjustierung durch einen Benutzer erfolgen.

Die erste elektronische Bildsensoreinheit kann dabei bis auf die vorgenannte Verlagerung entlang der eigenen optischen Achse ortsfest gegenüber der übrigen Vorrichtung ausgebildet bzw. angeordnet werden.

In einer alternativen Ausführungsform kann es ebenso vorgesehen sein, die erste elektronische Bildsensoreinheit gegenüber der Vorrichtung zusätzlich oder optional zu der vorbeschriebenen Verlagerung in einer Ebene, die zwischen optischer Achse der ersten elektronischen Bildsensoreinheit und der Probenlängsachse aufgespannt wird, verschwenkbar auszugestalten, so dass insbesondere der Winkel der optischen Achse der ersten elektronischen Bildsensoreinheit gegenüber der Probenlängsachse variierbar ist. Diese Ausgestaltungsform weist dabei den Vorteil auf, dass mittels einer einzigen ersten elektronischen Bildsensoreinheit unterschiedliche Ansichten des Kontaktbereiches zwischen Probe und Einbettwerkstoff generiert werden können, wodurch die erste elektronische Bildsensoreinheit sowohl zur Ermittlung der Probenparameter als auch zur Positionierung der Probe relativ zum Einbettwerkstoff genutzt werden kann.

Die erste elektronische Bildsensoreinheit kann dabei insbesondere von einer ersten Bildaufnahmeposition, in welchem der Winkel der optischen Achse der ersten elektronischen Bildsensoreinheit im Bereich von 90° +/- 30°, bevorzugt im Bereich von 90° +/- 15°, relativ zu der Probenlängsachse liegt, in eine zweite Bildaufnahmeposition verschwenkbar sein, in welcher der Winkel im Bereich von 45° +/- 30°, bevorzugt 45° +/- 15° relativ zu der Probenlängsachse liegt. Die angegebenen Aufnahmepositionen stellen die idealen Positionen für die Durchführung einer Ermittlung der Probenparameter (90°) bzw. für die Positionierung der Probe bzw. des Tiegels relativ zueinander dar (45°) dar. In der vorbezeichneten 90° Winkellage können die aufgenommenen Bilddaten im Wesentlichen ohne Berechnung einer eventuell vorliegenden Winkelverzerrung genutzt werden.

Weiterhin kann es vorgesehen sein, dass bei der Verschwenkung eine Optik in der ersten und zweiten Bildaufnahmeposition der ersten elektronischen Bildsensoreinheit verändert ist, so können beispielsweise in den unterschiedlichen Aufnahmepositionen als Optiken unterschiedliche Objektive angeordnet werden, an welche der erste elektronische Bildsensor optisch ankoppelbar ist. Die Ausführungsform weist dabei den Vorteil auf, dass die Vergrößerung und Fokussierung der ersten elektronischen Bildsensoreinheit in den unterschiedlichen Aufnahmepositionen lediglich einmal initial eingestellt werden muss und danach immer wieder während eines Messvorgangs wiederholt auch nach mehrmaligem Verschwenken der ersten elektronischen Bildsensoreinheit genutzt werden kann.

Die in dem Probenhalter aufgenommene Probe weist einen Probenkörper mit einer Probenlängsachse sowie einem ersten und zweiten Ende auf, wobei das erste Ende im Probenhalter aufgenommen und gehalten wird und das zweite Ende mit einer definierten Eindringtiefe in einen bereitgestellten Einbettwerkstoff eingebracht wird.

Der Einbettwerkstoff ist während des Einbringvorgangs flüssig und wird nach Einbringen des Probenkörpers durch eine chemische Reaktion und/oder durch eine Temperaturveränderung ausgehärtet. Es ist jedoch auch möglich, eine Lösung eines Einbettwerkstoffes in einem flüssigen Lösungsmittel über den Tiegel der Vorrichtung bereitzustellen, in welche darauffolgend der Probenkörper eingetaucht und in der Folge benetzt wird, woraufhin das flüssige Lösungsmittel durch Temperatureinbringung oder sonstige Trocknungsvorgänge entfernt und der Einbettwerkstoff getrocknet im festen Aggregatzustand verbleibt.

Der Tiegel kann rotationssymmetrisch zu der Probenlängsachse ausgestaltet werden und weist an dessen oberer, der Probe zugewandten, Oberfläche eine Vertiefung beispielsweise in Form einer Art zu der Probenlängsachse rotationssymmetrischer Mulde auf, worin der Einbettwerkstoff aufnehmbar ist. Durch den Benutzer wird in den Bereich der Mulde des Tiegels eine ausreichende Menge des Einbettwerkstoffes eingebracht, so dass dieser im flüssigen Zustand an der der Probe zugewandten Oberfläche in Seitenansicht aufgrund der Oberflächenspannung eine gekrümmte Oberfläche aufweist und in Richtung der Probe gegenüber dem Tiegel vorsteht. Die Mulde des Tiegels ist dabei derart ausgebildet, dass sich in Kombination mit der vorliegenden Oberflächenspannung des flüssigen Einbettwerkstoffes eine gekrümmte, insbesondere eine konvexe, relativ zu der Probenlängsachse rotationssymmetrische, Oberfläche ergibt. Die Mulde kann derart ausgebildet werden, dass die Oberfläche des flüssigen Einbettwerkstoffes in der Mitte des Tiegels einen geringeren Krümmungsradius als in den Randbereichen aufweist, bzw. annäherungsweise in Seitenansicht eine ebene Oberfläche bildet. Als Seitenansicht wird eine Ansicht orthogonal zu der Probenlängsachse bezeichnet. Die Krümmungsradien der Oberfläche des Einbettwerkstoffes können ebenfalls mittels der Auswerteeinrichtung ermittelt und bei der Berechnung der weiteren Probenparameter berücksichtigt werden.

Als Einbettwerkstoffe können beispielsweise thermoplastische und duroplastische Kunststoffe genutzt werden, es ist jedoch auch denkbar, nichtorganische Einbettwerkstoffe, wie insbesondere Zement oder Beton oder einen Keramikschlicker, in Verbindung mit einem Trocknungsverfahren zu verwenden. Weiterhin können jedoch auch jegliche unter Temperatureinfluss aufschmelzbare Werkstoffe in der Vorrichtung wie insbesondere Metalle, insbesondere Lötzinn, aber auch keramische Werkstoffe, als Einbettwerkstoffe untersucht werden. Die Ausgestaltung der Vorrichtung weist dabei den Vorteil auf, dass eine große Anzahl unterschiedlicher Einbettwerkstoffe und Probenkörper sowie Probenkörpermaterialien untersucht werden können, so dass die erfindungsgemäße Messvorrichtung einen weiten Anwendungsbereich findet.

Der Tiegel zur Aufnahme der Einbettwerkstoffe kann insbesondere aus metallischen Werkstoffen, wie insbesondere aus Aluminium, Stahl oder Kupfer oder einer entsprechenden Legierung der vorgenannten Werkstoffe, gefertigt werden. Die vorgenannten Werkstoffe weisen den Vorteil auf, dass diese gegenüber den verwendeten Einbettwerkstoffen chemisch unempfindlich sind, so dass der Tiegel nicht durch die Einbettwerkstoffe angegriffen oder zersetzt werden kann. Weiterhin sind die gewählten Werkstoffe entsprechend temperaturbeständig, so dass diese beispielsweise auf Temperaturen von bis zu 500° C aufheizbar sind.

Weiterhin wird es mit der erfindungsgemäßen Vorrichtung erstmals ermöglicht, Probenkörper mit Abmessungen im Bereich von wenigen µm aufzulösen und während des Einbettvorganges die Probenparameter aufgrund von Abmessungen der Probe bzw. des Einbettwerkstoffes im Bereich von weniger µm zu bestimmen. Beispielsweise können die Probenparameter während des Einbettvorgangs einer Carbonfaser mit einem beispielhaften Durchmesser von 5 µm in einen beliebigen Einbettwerkstoff untersucht werden.

Gemäß einer vorteilhaften Ausgestaltung der Erfindung kann es vorgesehen sein, dass die erste elektronische Bildsensoreinheit eine Ortsauflösung im Bereich von 2 bis 500 Pixel, besonders bevorzugt von 10 bis 120 Pixel, je Abmessung der aufzulösenden Probengeometrie, wie insbesondere des Faserdurchmessers, aufweist. Die Auflösung der ersten elektronischen Bildsensoreinheit kann somit vorteilhaft an die Abmessungen der aufzulösenden Proben angepasst werden.

Für die erste elektronische Bildsensoreinheit kann eine Bildaufnahmerate im Bereich von 0,1 bis 1000, bevorzugt von 1 bis 500, besonders bevorzugt von 5 bis 100 Bildern, pro Sekunde vorgesehen werden. Durch die Vorsehung von hohen Bildaufnahmeraten können ebenfalls die dynamischen Prozesse während des Benetzungsvorgangs beobachtet werden, beispielweise kann die Veränderung des Kontaktwinkels während des Eintauchens der Probe in den Einbettwerkstoff zeitaufgelöst analysiert werden.

Es kann vorteilhafterweise vorgesehen sein, dass mittels der Auswerteeinrichtung aus den Konturen des Einbettwerkstoffs und des Probenkörpers der Probe der Kontaktwinkel zwischen Einbettwerkstoff und Probenkörper und/oder der Durchmesser des Probenkörpers ermittelt wird. Die Ausgestaltung bietet dabei den Vorteil, dass die zu untersuchenden Probenparameter vollautomatisiert ermittelt werden können, eine aufwendige manuelle Bestimmung wird damit vermieden. Die Nutzung von Computern als Auswerteeinrichtung ermöglicht, die Probenparameter bereits während des Einbettvorgangs zu ermitteln.

In einer zweidimensionalen Abbildung der Seitenansicht des Kontaktbereiches zwischen Einbettwerkstoff und Probe, welche mittels der ersten elektronischen Bildsensoreinheit generierbar ist, bildet der die Probe benetzende flüssige Einbettwerkstoff an den beiden gegenüberliegenden Probenseitenflächen jeweils einen Meniskus bzw. eine Überhöhung der Flüssigkeit gegenüber der sonstigen Flüssigkeitsoberfläche aus. Insbesondere kann es vorgesehen sein, den Kontaktwinkel zwischen Einbettwerkstoff und Probenkörper an den beiden gegenüberliegenden Menisken zu messen, wobei eine Mittelung der beiden berechneten Werte vorgenommen werden kann, um einen mittleren Kontaktwinkel in einem einzigen Bild zu berechnen. Die Mittelung des Kontaktwinkels und weiterer Probenparameter, wie beispielsweise die Meniskenhöhe über die beiden gegenüberliegenden Menisken, weist dabei den Vorteil auf, dass Messungenauigkeiten aufgrund einer schrägen Einbringung des Probenkörpers in den Einbettwerkstoff oder aufgrund einer vorliegenden Oberflächenkrümmung des Einbettwerkstoffes ausgeglichen werden können.

Ebenfalls kann eine Mittelung des Kontaktwinkels bzw. weiterer berechneter Probenparameter über mehrere Einzelbilder erfolgen.

Es kann weiterhin vorgesehen sein, mehrere Einzelbilder über die Zeit des Einbettungsvorganges bis zum Abschluss des Aushärtungsprozesses des Einbettwerkstoffes über die erste elektronische Bildsensoreinheit zu generieren, um in den generierten Bildern Veränderungen des Benetzungswinkels bzw. der weiteren zu ermittelnden Probenparametern über den Aushärtungs- bzw. Einbettungsprozess zu beobachten und auszuwerten. Die vorgesehene Ausführungsform weist den Vorteil auf, dass es über die zeitaufgelöste Auswertung der Probenparameter möglich ist, die Randbedingungen für den Ablauf des Aushärtungsprozesses, wie beispielsweise eine Temperaturführung, zu optimieren.

Weiterhin ist es möglich, lediglich Bilder zu definierten Zeitpunkten des Einbettvorgangs bzw. Aushärtungsvorgangs bzw. nach Abschluss des Aushärtungsvorganges zu generieren und lediglich diese spezifischen Bilder im Hinblick auf die interessierenden Probenparameter auszuwerten. Durch die Auswertung zu spezifischen Zeitpunkten kann die generierte Datenmenge und der Rechenaufwand gering gehalten werden.

Die erfindungsgemäße Vorrichtung kann in einer bevorzugten Ausführungsform weiterhin eine zweite Antriebseinrichtung umfassen, mittels derer der Tiegel mit dem darin aufgenommenen Einbettwerkstoff relativ zu der Probe verlagerbar ist. Dabei ist eine erste Bewegungsachse zur Verlagerung des Tiegels in Richtung der Probenlängsachse vorgesehen, wobei bevorzugt eine zweite und dritte Bewegungsachse eine Verlagerung des Tiegels orthogonal zu der Probenlängsachse ermöglichen. Dabei können die zweite und dritte Bewegungsachse besonders bevorzugt einen Winkel von 90° einschließen. Der Tiegel mit dem Einbettwerkstoff kann dabei über die drei Bewegungsachsen dreidimensional im Raum gegenüber der Vorrichtung und insbesondere gegenüber der Probe verlagert werden. Mittels der Verlagerung in Richtung der Probenlängsachse ist es zunächst ermöglicht, unterschiedliche Volumina des Einbettwerkstoffes im Tiegel und daraus resultierende unterschiedliche Füllhöhen auszugleichen. Durch die unterschiedlichen Füllhöhen verändert sich in der Vorrichtung der initiale Kontaktpunkt zwischen Probe und Einbettwerkstoff gegenüber dem ersten elektronischen Bildsensor. Mittels der Verlagerung entlang der ersten Bewegungsachse wird es ermöglicht, den initialen Kontaktpunkt zwischen Probe und Einbettwerkstoff wieder in das Zentrum des ersten elektronischen Bildsensors zu verlagern.

Die Verlagerung entlang der zweiten und dritten Bewegungsachse ermöglicht, den Tiegel mit dem Einbettwerkstoff gegenüber der Probe zu verlagern, derart, dass diese so ausrichtbar ist, dass die Probe genau im Mittelpunkt des bereitgestellten Einbettwerkstoffes eingebracht werden kann. Hierzu kann es vorgesehen sein, dass die mittels der ersten elektronischen Bildsensoreinheit erzeugten Bilder für einen Benutzer der Vorrichtung ausgegeben werden, so dass diese anhand der Bilder manuell eine Verlagerung des Tiegels relativ zu der Probe über die Bewegungsachsen der zweiten Antriebseinrichtung vornehmen kann.

Die einzelnen Bewegungsachsen der zweiten Antriebseinrichtung können jeweils mit Parallelogrammführungen ausgestaltet werden. Durch die Parallelogrammführungen kann die Probe hochgenau entlang der festlegten Bewegungsachsen verlagert werden, ohne dabei die Winkellage des mit der zweiten Antriebseinrichtung verlagerbaren Tiegels zu verändern.

Die Verlagerung des Tiegels relativ zu der Probe mittels der zweiten Antriebseinrichtung kann entlang jeder der Bewegungsachsen entweder ausschließlich manuell beispielsweise über Handdrehräder nach Art von Mikrometerschrauben und/oder mittels von elektrischen Antriebseinrichtungen wie beispielsweise Schrittmotoren erfolgen. Dabei ist eine singuläre Verlagerung des Tiegels entlang einer der vorgenannten Achsen, aber auch alternativ eine kombinierte Verlagerung entlang mehrerer Bewegungsachsen gleichzeitig, möglich.

Bei der Verlagerung des Tiegels über die zweite Antriebseinrichtung mittels elektrischer Antriebseinrichtungen, wie insbesondere mit Schrittmotorantrieben, können unterschiedliche Vorschubgeschwindigkeiten für die Bewegungen vorgegeben werden, wobei die vorgebbaren Vorschubgeschwindigkeiten bevorzugt im Bereich von 0,1 bis 2000 µm pro Sekunde, besonders bevorzugt im Bereich von 2 bis 200 µm pro Sekunde, liegen. Die Vorsehung der elektrischen Antriebseinrichtungen bietet den Vorteil, dass eine Positionierung mittels der ersten und/oder zweiten Antriebseinrichtung auch automatisiert mittels geeigneter Algorithmen über die Auswerteeinrichtung erfolgen kann, wodurch folglich die Bildauswertung und Steuerung auch vollautomatisch erfolgen kann.

Es kann weiterhin vorgesehen sein, dass gegenüberliegend der ersten elektronischen Bildsensoreinheit eine flächige Beleuchtungseinrichtung angeordnet ist. Die flächige Beleuchtungsvorrichtung gegenüber der ersten elektronischen Bildsensoreinheit weist dabei den Vorteil auf, dass die Kanten der Probe und des Matrixwerkstoffes auf den generierten zweidimensionalen Bildern mit einer ausreichenden Schärfe wiedergegeben werden, als auch das hohe Bildwiederholraten ermöglicht werden.

Die flächige Beleuchtungsvorrichtung kann dabei sowohl innerhalb der Probenkammer, aber auch außerhalb der Probenkammer, angeordnet werden, wobei bei einer Vorsehung außerhalb der Probenkammer die Probenkammer entsprechend optisch transparente Fenster oder Öffnungen zum Durchlass der Lichtstrahlung der flächigen Beleuchtungseinrichtung aufweist. Die Probenkammer kann mit lichtdurchlässigen Flächen bzw. Teilbereichen ausgestaltet werden, durch welche eine flächige Beleuchtungseinrichtung gebildet wird.

Die flächige Beleuchtungseinrichtung kann dabei derart angeordnet werden, dass diese aus Sicht des ersten elektronischen Bildsensors hinter der Probe bzw. dem Probenkörper in Verlängerung der optischen Achse des ersten elektronischen Bildsensors angeordnet ist.

Es kann weiterhin vorgesehen sein, dass die ersten und/oder zweiten elektronischen Bildsensoreinheiten mit einem manuellen und/oder automatischen Fokussierungssystem und/oder mit einem telezentrischen Objektiv ausgestattet sind. Mittels der vorgenannten Optiken kann der Fokus der ersten elektronischen Bildsensoreinheit ohne Verlagerung des eigentlichen optischen Sensors erfolgen, so dass auch während eines Messvorgangs die Schärfe der generierten Bilder nachgesteuert werden kann.

In einer weiterhin bevorzugten Ausführungsform der erfindungsgemäßen Vorrichtung kann diese zusätzlich mit einer zweiten elektronischen Bildsensoreinheit sowie einer kreisförmigen Leuchtfläche ausgestattet werden, wobei die kreisförmige Leuchtfläche und die zweite elektronische Bildsensoreinheit unter einem gleichen Winkel im Bereich von 45° +/- 30°, besonders bevorzugt im Bereich von 45° +/ 15°, relativ zu der Probenlängsachse einander gegenüberliegend und in Richtung des Tiegels angeordnet sind. Mittels der zweiten elektronischen Bildsensoreinheit in Kombination mit der gegenüberliegenden kreisförmigen Beleuchtungsfläche kann eine hochgenaue Positionierung der einzubettenden Probe gegenüber dem Einbettwerkstoff vorgenommenen werden. Die kreisförmige Leuchtfläche erzeugt dabei in der Mitte des Einbettwerkstoffes auf dessen Oberfläche eine Spiegelung, welche mittels der zweiten elektronischen Bildsensoreinheit aufgelöst werden kann. Bei der Annäherung einer Faser in dem Bereich des Einbettwerkstoffes werden ein Schatten der Probe auf der Oberflächenspiegelung sowie die Probe selbst sichtbar. Wenn nunmehr der Schatten der Probe mit der Abbildung der Probe fluchtend ausgerichtet wird, so kann die Probe exakt mittig in den Einbettwerkstoff eingebracht und aus dem Abstand des Probenschattens und der Probe der Abstand zwischen Probe und Oberfläche des Einbettwerkstoffes ermittelt werden.

Die Bilder der zweiten optischen Bildsensoreinrichtung können somit zur automatisierten Positionierung der Probe gegenüber dem Einbettwerkstoff unter Verwendung der Auswerteeinrichtung genutzt werden. Alternativ können jedoch die Bilder der zweiten optischen Auswerteeinrichtung ebenfalls für einen Benutzer auf einem Bildschirm ausgegeben werden, der dann anhand dieser Bilder über die erste und/oder zweite Antriebseinrichtung eine Positionierung vornehmen kann.

Bevorzugt können die kreisförmige Leuchtfläche sowie der zweite elektronische Bildsensor besonders bevorzugt im Winkelbereich von 30° bis 60° relativ zu der Probenlängsachse - in einer besonders bevorzugten Ausführungsform in einem Winkel von 45° - relativ zur Probenlängsachse angeordnet werden. In den zuvor genannten Winkelbereichen ergeben sich die besten Sichtverhältnisse auf den flüssigen Einbettwerkstoff und die Probe.

Der zweite elektronische Bildsensor sowie die gegenüberliegende kreisförmige Leuchtfläche können dabei außerhalb der Probenkammer der Vorrichtung angeordnet werden, wobei in der Probenkammer entsprechende Fenster bzw. Durchführöffnungen sowohl für die Leuchtfläche als auch für den zweiten elektronischen Bildsensor vorgesehen werden können.

Die zweite elektronische Bildsensoreinheit kann weitere Antriebseinrichtungen aufweisen, mittels derer der zweite elektronische Bildsensor entlang dessen optischer Achse bewegbar ist, so dass eine Bewegung von dem mittels des zweiten elektronischen Bildsensors aufzulösenden Objekt hin und weg möglich ist. Weiterhin kann die zweite elektronische Bildsensoreinheit analog zu der ersten elektronischen Bildsensoreinheit ausgestaltet sein.

Die Helligkeit der kreisförmigen Leuchtfläche als auch die Leuchtfarbe können dabei regelbar ausgestaltet sein. Die Helligkeitssteuerung kann dabei manuell bzw. automatisiert über die Auswerteeinrichtung erfolgen, so dass zu jeder Zeit eine optimale Ausleuchtung und Sichtbarkeit in den mittels der zweiten elektronischen Bildsensoreinheit erzeugten Bilder gewährleistet ist. Je nach Art der untersuchten Kombination von Einbettwerkstoff und Probe ist es erforderlich, unterschiedliche Helligkeiten bzw. Leuchtfarben zu wählen, um ausreichende Abbildungsschärfen in den generierten Bildern sicherzustellen.

Die optische Achse der zweiten elektronischen Bildsensoreinheit ist im Wesentlichen auf den Kontaktbereich zwischen Probe und Einbettwerkstoff ausgerichtet, wobei der Strahlengang der kreisförmigen Leuchtfläche die optische Achse der zweiten elektronischen Bildsensoreinheit im initialen Kontaktpunkt zwischen Probe und Einbettwerkstoff schneidet. Weiterhin schließt der Strahlengang der kreisförmigen Leuchtfläche und die optische Achse der zweiten elektronischen Bildsensoreinheit jeweils relativ zu der Probenlängsachse den gleichen Winkel ein, derart, dass der Einfallwinkel der durch die kreisförmige Leuchtfläche erzeugten Lichtstrahlen gleich dem Ausfallwinkel ist, in welchem die optische Achse der zweiten elektronischen Bildsensoreinheit angeordnet ist.

Weiterhin kann es vorgesehen sein, die erfindungsgemäße Vorrichtung mit einer Heizeinrichtung auszugestalten, mittels derer der Einbettwerkstoff aushärtbar oder aufschmelzbar ist, wobei der Einbettwerkstoff insbesondere auf die Aushärt- oder Schmelztemperatur aufheizbar ist. Die Vorsehung einer Heizeinrichtung in der Vorrichtung bietet dabei den Vorteil, dass die Probenparameter während des gesamten Einbett- und ggf. auch Aushärtevorganges unter unterschiedlichen thermischen Einflüssen ermittelt werden können. Insbesondere wird es dadurch ermöglicht, die dynamischen Prozesse während eines Einbett- und Aushärtungsvorgangs beispielsweise an thermoplastischen Einbettwerkstoffen zu untersuchen, wobei insbesondere auch Veränderungen während des Schrumpfungsvorgangs der Matrixwerkstoffe beobachtet und durch die Ermittlung von Probenparametern charakterisiert werden können. Weiterhin ermöglicht die Anordnung der Heizeinrichtung, die Auswirkungen von auf makroskopischer Ebene ablaufender Prozesse, beispielsweise in der Produktion von großen Faserverbundbauteilen, auf den mikro-mechanischen Maßstab zu beobachten und quantitativ zu charakterisieren. Beispielsweise bei der Fertigung von Faserverbundbauteilen mit großen Volumen in Kombination mit der Verwendung von hochreaktiven Harzsystemen als Einbettwerkstoffe für die Fasern entstehen aufgrund der exotherm ablaufenden Prozesse der Harzsysteme hohe Temperaturen in den Faserverbundbauteilen, welche die Anbindung zwischen Einbettwerkstoff und eingebetteten Fasern beeinflussen. Diese Einflüsse können durch die zusätzliche Temperatureinbringung mittels der Heizeinrichtung nachgestellt bzw. simuliert werden. Hierzu können mittels der Auswerteeinrichtung geeignete Temperatur-Zeit-Verläufe für die Heizeinrichtung vorgegeben werden.

Die Heizvorrichtung kann dabei eine an die Außenabmessungen des Tiegels angepasste Aussparung zur Aufnahme des Tiegels aufweisen, so dass der Tiegel in die Aussparung einlegbar ist. Bei einer Aufheizung mittels der Heizeinrichtung kann ein direkter Wärmetransfer von der Heizeinrichtung über den Tiegel hin zu dem Tiegel aufgenommenen Einbettwerkstoff erfolgen. Es ist jedoch auch möglich, über die Heizeinrichtung eine induktive Beheizung des Probentiegels und des Einbettwerkstoffes zu erzeugen oder mittels Strahlungsenergie wie beispielsweise Lichtstrahlen, Laserstrahlen oder IR-Strahlen, eine Aufheizung des Tiegels und/oder des Einbettwerkstoffes vorzunehmen. Die Aufheizung des Einbettwerkstoffes mittels Strahlungsquellen bietet dabei den Vorteil, dass die eigentliche Heizeinrichtung entfernt von dem Tiegel angeordnet werden kann, wodurch der erforderliche Bauraum verringert werden kann und darüber hinaus eine Temperatureinbringung lediglich in dem erforderlichen Bereich erfolgt und die weiteren Einrichtungen der Vorrichtung, insbesondere Sensoren, nicht unnötig aufgeheizt werden.

Die Heizeinrichtung kann dabei insbesondere durch eine elektrisch betreibbare Heizpatrone ausgebildet werden, deren Temperatur bzw. Temperaturverlauf elektronisch gesteuert werden kann.

Insbesondere kann als Heizeinrichtung eine Heizwendel vorgesehen werden. Es ist ebenfalls denkbar, die Heizeinrichtung explosionsgeschützt auszugestalten.

Es kann vorgesehen sein, dass zumindest der Probenhalter und der Tiegel von einer Probenkammer umschlossen sind, wobei die Probenkammer zumindest eine in dem Probenhalter gehaltene Probe und einen in dem Tiegel aufgenommen Einbettwerkstoff gegenüber der die Vorrichtung umgebende Atmosphäre abgrenzt. Die Probenkammer bietet dabei den Vorteil, dass der vorgesehene Messbereich zwischen Probe und Einbettwerkstoff von äußeren Einflüssen geschützt wird.

Die erfindungsgemäß vorgesehene Vorrichtung muss dabei nicht zwingend gegenüber der umgebenden Atmosphäre die Probenkammer hermetisch abriegeln, sondern kann bevorzugt einen geringen Volumenstrom zwischen der Probenkammer der Umgebung zulassen.

Dieser Volumenstrom ist dadurch bedingt, dass bevorzugt in der Probenkammer ebenfalls Durchführungen nach der Art von Öffnungen ausgestaltet sind, wobei Durchführungen beispielsweise im Bereich der Heizeinrichtung und/oder des Probenhalters bzw. weiterer Einrichtungen, beispielsweise im Bereich von Objektiven der Bildsensoreinheiten, vorgesehen werden können. Weiterhin kann die Probenkammer eine vordere Öffnung aufweisen, welche lediglich gegenüber der Umgebung mit einer magnetisch gehaltenen Deckplatte abgedeckt ist.

Insbesondere kann es vorgesehen sein, die Probenkammer zumindest bereichsweise optisch transparent auszugestalten bzw. die Wände der Probenkammer zumindest optisch transparent auszugestalten, beispielsweise für die optischen Sensoren bzw. für entsprechende Beleuchtungsvorrichtungen. Hierzu kann die Probenkammer insbesondere entsprechende Fenster aufweisen.

In einer besonders bevorzugten Ausführungsform kann der Probenhalter als Kanüle mit einer fluidal verbundenen Saugeinrichtung ausgebildet werden, wobei an dem der Saugeinrichtung zugewandten Ende der Kanüle eine Anschlageinrichtung für die Probe, beispielsweise in Form einer fluidal durchlässigen Platte, ausgestaltet ist. Die fluidal durchlässige Platte kann dabei über ein unverformbares Filtermaterial gebildet werden, dessen Poren groß genug sind, um den Fluidstrom von der Kanüle zu der Saugeinrichtung zu ermöglichen, jedoch so klein sind, dass die eingesogene Probe nicht hindurchtreten kann. Die Ausbildung des Probenhalters als Kanüle ist dabei vorteilhaft, da der aufzunehmende Probenkörper bzw. die aufzunehmende Probe zunächst mittels der Saugwirkung sehr einfach in den Probenhalter einbringbar ist und dort über die Saugeinrichtung eine definierte Haltekraft auf den Probenkörper aufgebracht wird. Weiterhin wird der Probenkörper, wie beispielsweise eine Einzelfaser, entlang deren Längsachse durch Anlage in der Kanüle gestützt, wodurch ein Abknicken oder Ausbrechen des Probenkörpers im Bereich des Probenhalters verhindert wird. Die Probe ist bei Überschreiten der anliegenden Haltekraft wieder aus der Kanüle ausziehbar, so dass ein Abreißen des Probenkörpers im Bereich des Probenhalters bei Aufbringung einer Überlast auf die Probe vermieden wird.

Die Saugeinrichtung erzeugt dabei eine Saugwirkung und damit einen Fluidstrom aus der Probenkammer durch die Kanüle hin zu der Saugeinrichtung. Die Saugeinrichtung kann insbesondere über eine Pumpe gebildet werden, welche zum Einsaugen und Festhalten einer Probe bzw. eines Probenkörpers in der Kanüle den Volumenstrom erzeugt.

Die Stärke des Volumenstroms kann dabei variabel über die Saugleistung der Pumpe gesteuert werden, worüber ebenfalls die Haltekraft der Probe in dem Probenhalter einstellbar bzw. regulierbar ist. Es ist somit ermöglicht, die Haltekräfte spezifisch an das Gewicht und die Abmessungen der zu haltenden Probe anzupassen.

Bei der Pumpe handelt es sich bevorzugt um eine pressluftbetriebene Vakuumpumpe, es können aber auch alternative Einrichtungen, wie beispielsweise eine Membranpumpe oder eine Drehschieberpumpe sowie jegliche andere Einrichtungen eingesetzt werden, mittels derer eine Saugwirkung erzeugbar ist.

Der Querschnitt der Kanüle bzw. des Kanals der Kanüle kann beispielsweise kreisförmig, elliptisch, rechteckig, quadratisch oder schlitzförmig je nach Querschnitt der aufzunehmenden Probe bzw. des aufzunehmenden Probenkörpers ausgestaltet werden.

Dabei kann die Abmessung der Kanüle an die Probe bzw. Probenquerschnittsgeometrie angepasst werden, insbesondere kann die Kanüle einen bis 100-fachen Durchmesser einer aufzunehmenden Probe, wie beispielsweise eine Einzelfaser, aufweisen. Entsteht somit ein Spalt zwischen der aufzunehmenden Probe und der Kanüle mittels der Saugeinrichtung, kann über diesen Spalt ein kontinuierlicher Fluidstrom, insbesondere Gasstrom, anliegen, mittels dessen die aufzunehmende Probe in der Kanüle gehalten wird.

Es kann weiterhin vorgesehen sein, dass die Heizeinrichtung über mehrere Verbindungssäulen, wie insbesondere zwei oder drei Verbindungssäulen, mit der ersten oder zweiten Antriebseinrichtung verbunden ist. Die Vorsehung der Anbindung der Heizeinrichtung an die jeweilige Antriebseinrichtung über Verbindungssäulen weist dabei den Vorteil auf, dass die in der Heizeinrichtung ggf. erzeugten hohen Temperaturen nicht unmittelbar an die Antriebseinrichtung und weitere Einrichtungen der Vorrichtungen übertragen werden. Die Verbindungssäulen sind dabei als Isolierungselemente ausgestaltet. Die Ausbildung von drei Verbindungssäulen weist den zusätzlichen Vorteil auf, dass eine hohe Positionierstabilität der Heizeinrichtung bzw. des darin aufgenommenen Tiegels mit dem Einbettwerkstoff sichergestellt werden kann.

In der erfindungsgemäßen Vorrichtung kann weiterhin mindestens eine Zuführöffnung für eine Gaszuführung in die Probenkammer ausgestaltet werden, wobei die mindestens eine Zuführöffnung bevorzugt die Kanüle der Probenaufnahme umgibt. Über die Gaszuführöffnung können beliebige Gase und/oder Fluide der Probenkammer zuführbar sein, derart, dass in der Probenkammer eine beliebige Atmosphäre an Fluiden einstellbar ist.

In einer besonders bevorzugten Ausführungsform kann die Gasaustrittsöffnung dabei derart ausgestaltet werden, dass diese die Kanüle ringförmig umgebend angeordnet ist, beispielsweise derart, dass die Gasaustrittsöffnung einen die Kanüle umgebenden Ringspalt aufweist. Die Ausgestaltung der Gasaustrittsöffnung umgebend zu der Kanüle weist dabei den Vorteil auf, dass sich durch den Gasaustritt um die Kanüle eine Art "Fluidvorhang" bildet, welcher den Bereich der Kanüle gegen den Eintrag von Partikeln, Fremdkörpern oder gegen den Eintrag von verdampfenden Bestandteilen des Einbettwerkstoffes schützt, um eine Verstopfung der Kanüle zu verhindern.

Über die Zuführöffnungen können inerte Gase, alternativ auch reaktive Gase, der Probenkammer zugeführt werden. Es kann eine Intergasatmosphäre in der Probenkammer sichergestellt werden, um somit beispielsweise eine chemische Veränderung von erhitzten Stoffen durch Reaktion mit Bestandteilen der Umgebungsluft oder die Entstehung von explosionsgefährdeten Gasgemischen in der Probenkammer zu verhindern.

Die Probenkammer kann dabei über die Zuführung eines definierten Volumen- bzw. Gaszustroms über die Zuführöffnung gegenüber der Umgebung auf einen Überdruck gesetzt werden. Wird das zuströmende Volumen des zugeführten Gases, wie insbesondere des Inertgases, derart gewählt, dass der Volumenstrom des zugeführten Gases höher als die Leckraten der Probenkammer aufgrund beispielsweise der vorgesehenen Durchführöffnungen ist, kann nach einer initialen Einlaufphase sichergestellt werden, dass die Probenkammer vollständig mit Inertgas befüllt ist, welches insbesondere den Einbettwerkstoff und die Heizelemente der Heizeinrichtung umgibt.

Es kann zudem ein abgegrenzter Raum vorgesehen werden, der fluidal gegenüber der Probenkammer abgedichtet ist, derart, dass kein Volumenaustausch zwischen der Probenkammer und dem abgegrenzten Raum möglich ist, wobei der abgegrenzte Raum in thermischem Kontakt mit der Heizeinrichtung steht.

Es kann bevorzugt vorgesehen sein, dass der abgegrenzte Raum weiterhin mindestens eine Kühlfluidzuführung umfasst. Weiterhin kann der Raum ebenfalls eine Kühlfluidabführung aufweisen. Bei dem Kühlfluid kann es sich beispielsweise um Kühlluft oder um Stickstoff handeln, grundsätzlich ist jedoch die Zu- und Abführung jedes geeigneten Kühlmediums denkbar.

Es kann vorgesehen sein, dass ein zeitgesteuerter Temperaturverlauf mittels der Heizeinrichtung und/oder der Kühlfluidzuführung vorgenommen wird, um einen definierten Temperaturzeitverlauf in der Probenkammer bzw. im Bereich des Tiegels und damit des Einbettwerkstoffes zu erzeugen.

Insbesondere kann bevorzugt mindestens ein Temperatursensor im Bereich der Heizeinrichtung spezifisch im Bereich des Tiegels vorgesehen werden, um eine exakte Steuerung des Temperaturzeitverlaufes im Bereich des Tiegels bzw. des aufzuschmelzenden Einbettwerkstoffes zu ermöglichen. In einer weiterhin bevorzugten Ausführungsform kann der Raum mit den Verbindungssäulen fluidal verbunden sein, insbesondere kann es bevorzugt vorgesehen sein, über eine Verbindungssäule dem Raum Kühlfluid zuzuführen und über eine weitere Verbindungssäule Kühlfluid aus dem Raum wieder abzuführen.

Ein erfindungsgemäßes Verfahren zur Messung von Probenparametern während eines Einbettvorgangs kann erfindungsgemäß die Verfahrensschritte umfassen:
- Eintauchen eines Probenkörpers in einen flüssigen Einbettwerkstoff zum Einbetten eines definierten Anteils des Probenkörpers in dem Einbettwerkstoff
- Aushärten des Einbettwerkstoffes durch chemische Reaktion und/oder Änderung der Temperatur des Einbettwerkstoffes
- Generieren von mindestens einem Bild des Kontaktbereiches zwischen Probenkörper und Einbettwerkstoff sowie der Probe und/oder des Einbettwerkstoffes selbst mittels einer ersten elektronischen Bildsensoreinheit während des Eintauchvorgangs und/oder während des Aushärtevorganges und/oder bis zum Ende des Aushärtevorgangs
- Zuführen des mindestens einen Bildes zu einer Auswerteeinrichtung zur Ermittlung von charakteristischen Probenparametern, wie insbesondere des Probendurchmessers und/oder des Kontaktwinkels zwischen Probenkörper und Einbettwerkstoff.

Es kann dabei vorgesehen sein, dass die erste elektronische Bildsensoreinheit während der Bildgenerierung derart angeordnet ist, dass zwischen der optischen Achse der ersten Bildsensoreinheit und der Probenlängsachse ein Winkel im Bereich von 90° +/- 30°, besonders bevorzugt von 90° +/- 15° eingeschlossen wird.

Es zeigen:
- Fig. 1: eine erste beispielhafte Ausführungsform einer erfindungsgemäßen Vorrichtung zur Messung von Probenparametern während eines Einbettvorganges,
- Fig. 2: eine zweite beispielhafte Ausführungsform einer erfindungsgemäßen Vorrichtung,
- Fig. 3: eine Detailansicht des Kontaktbereiches zwischen Probe und Einbettwerkstoff in einer Seitenansicht.

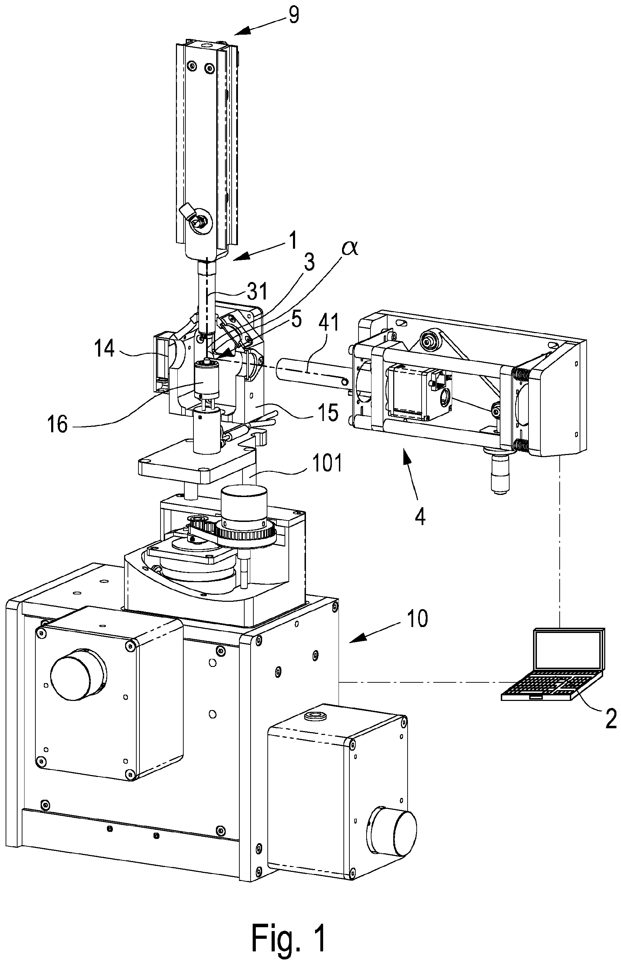

In der Fig. 1 ist eine erste beispielhafte Vorrichtung zur Messung von Probenparametern während eines Einbettvorganges dargestellt. Die Vorrichtung verfügt dabei über einen Probenhalter 1, in welchen eine Probe 3 zur Halterung aufgenommen ist, sowie einen Tiegel 5, in welchen eine definierte Menge eines Einbettwerkstoffes 7 für den Einbettvorgang bereitgestellt ist. Die Fig. 1 zeigt dabei die Vorrichtung in einer Einbettposition, in welcher die Probe 3 eine spezifizierte Eintauchtiefe im Einbettwerkstoff 7 aufweist. In der dargestellten Ausführungsform weist die Vorrichtung weiterhin eine erste Antriebseinrichtung 9 auf, mittels derer der Abstand zwischen der Probe und dem Tiegel von einer ersten Position, in welcher die Probe einen Abstand zu dem Einbettwerkstoff 7 aufweist (nicht dargestellt), in eine Einbettposition, in welcher die Probe 3 eine spezifizierte Eintauchtiefe im Einbettwerkstoff 7 aufweist und umgekehrt, veränderbar ist. In dem dargestellten Ausführungsbeispiel wurde die erste Antriebseinrichtung dabei im Bereich des Probenhalters angeordnet, womit eine Verlagerung der Probe relativ zu dem Tiegel 5 bzw. dem Einbettwerkstoff 7 ermöglicht ist. Weiterhin umfasst die erfindungsgemäße Vorrichtung eine erste elektronische Bildsensoreinheit 4, mittels derer Bilder des Kontaktbereiches zwischen Probe 3 und Einbettwerkstoff 7 sowie der Probe 3 und des Einbettwerkstoffes 7 selbst im Kontaktbereich und ggf. deren Umgebung aufgenommen werden können, wobei in der dargestellten Ausführungsform zwischen der optischen Achse 41 des ersten elektronischen Bildsensors 4 und der Längsachse 31 der Probe 3 ein Winkel α von 90° eingeschlossen ist. In der dargestellten Ausführungsform weist die Vorrichtung weiterhin eine Probenkammer 15 auf, welche zur besseren Übersichtlichkeit entlang der Probenlängsachse in der Bildebene geschnitten dargestellt ist. Wie dies der Fig. 1 entnehmbar ist, begrenzt die Probenkammer 15 grundsätzlich den Bereich des Tiegels 5, in welchen ein Einbettwerkstoff 7 bereitgestellt wird und den Probenhalter 1 mit der aufgenommenen Probe 3 gegenüber der Umgebung. Die Probenkammer 15 weist in der dargestellten Ausführungsform mehrere Durchführungen, insbesondere für die Probenhalterung 1 sowie für eine an einer zweiten Antriebseinrichtung 10 befestigte Heizeinrichtung 16, auf. Die Probenkammer 15 weist weiterhin mehrere optisch transparente Fenster, beispielsweise im Bereich der ersten elektronischen Bildsensoreinheit 4, auf, sowie weitere Öffnungen zur Befestigung von Beleuchtungseinrichtungen 14. In der dargestellten Ausführungsform umfasst die Vorrichtung weiterhin eine zweite Antriebseinrichtung 10, mittels derer der Tiegel 5 im Einbettwerkstoff 7 relativ zu der Probe 3 verlagerbar ist, wobei eine erste Bewegungsachse 101 eine Verlagerung des Tiegels bzw. des Einbettwerkstoffs entlang der Probenlängsachse 31 ermöglicht. Weiterhin umfasst die Antriebseinrichtung 10 eine zweite sowie dritte Bewegungsachse 102, 103 (nicht dargestellt), die eine Verlagerung orthogonal zu der Probenlängsachse 31 ermöglichen und wobei die zweite und dritte Bewegungsachse einen Winkel von 90° einschließen. In der dargestellten Ausführungsform weist die zweite Antriebseinrichtung drei Antriebsmotoren auf, mit deren Hilfe eine Verlagerung entlang der drei Bewegungsachsen 101 bis 103 erfolgen kann. Die Vorrichtung weist dabei weiterhin an den jeweiligen Bewegungsachsen 101 bis 103 zusätzliche Drehknöpfe auf, welche manuell durch eine Person bedient werden können, so dass eine Verlagerung des Tiegels 5 relativ zu der Probe 3 ebenfalls manuell durch Eingriff eines Benutzers bewirkt werden kann. In der dargestellten Ausführungsform gemäß Fig. 1 weist die erste elektronische Bildsensoreinheit 4 weiterhin eine eigene Antriebseinrichtung auf, mittels derer der erste elektronische Bildsensor und/oder die Optik der ersten elektronischen Bildsensoreinheit entlang deren optischer Achse 41 verlagerbar ist. Die Antriebseinrichtung ist dabei in dem gezeigten Ausführungsbeispiel manuell als eine Art Mikrometerschraube ausgestaltet, derart, dass ein Benutzer mit der vorgenannten Mikrometerschraube eine Verlagerung der ersten optischen Bildsensoreinheit 4 entlang dessen optischer Achse 41 bewirken kann. Die Verlagerung erfolgt dabei über eine Parallelogrammführung. Die Vorrichtung umfasst weiterhin eine Auswerteeinrichtung 2, welche über eine Datenverbindung mit den übrigen Einrichtungen der Messvorrichtung, insbesondere mit der ersten elektronischen Bildsensoreinheit 4, verbunden ist.

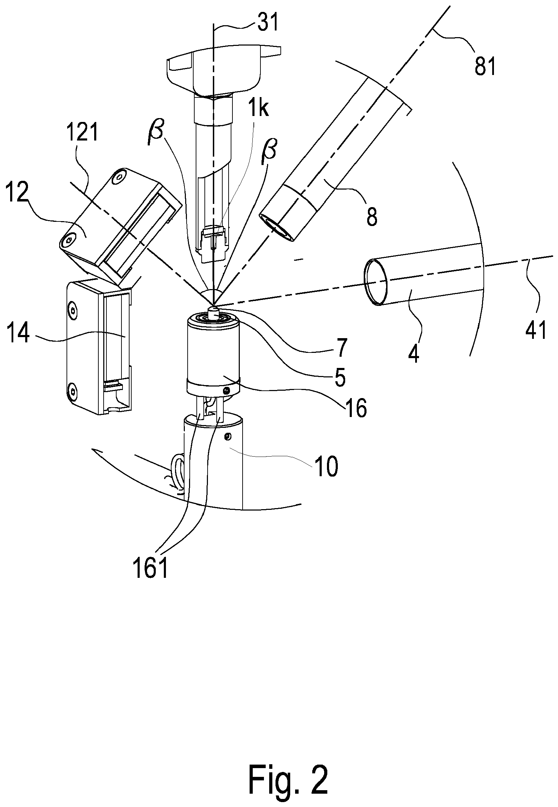

Die Fig. 2 zeigt einen vergrößerten Ausschnitt einer beispielhaften zweiten Ausführungsform einer erfindungsgemäßen Vorrichtung, wobei der Bereich zwischen Probe 3 und Matrixwerkstoff 7 vergrößert dargestellt worden ist und wobei die Probenkammer 15 der Übersichtlichkeit halber ausgeblendet wurde. Die Vorrichtung gemäß Fig. 2 weist dabei grundsätzlich denselben Aufbau wie die Vorrichtung gemäß Fig. 1 auf, wobei die Vorrichtung gemäß Fig. 2 zusätzlich zu der Vorrichtung gemäß Fig. 1 eine zweite elektronische Bildsensoreinheit 8 sowie eine Leuchtfläche 12 umfasst, wobei die Leuchtfläche 12 und die zweite elektronische Bildsensoreinheit 8 jeweils unter einem gleichen Winkel β unter etwa 45° relativ zu der Probenlängsachse 31 einander gegenüberliegend und in Richtung des Tiegels 5 angeordnet sind. Die Lichtstrahlen der kreisförmigen Leuchtfläche 12, welche als strichpunktierte Linie dargestellt sind, weisen einen Winkel β relativ zu der Probenlängsachse 30 auf. Die optische Achse 81 des zweiten elektronischen Bildsensors 8 weist den gleichen Winkel β relativ zu der Probenlängsachse 31 auf.. Der in dem Tiegel 5 bereitgestellte Einbettwerkstoff 7 ist mittels der Heizeinrichtung 16 aufschmelzbar oder aushärtbar. Der Tiegel 5 ist dabei in einer Aussparung der Heizeinrichtung 16 aufgenommen bzw. lediglich dort eingelegt. Die dargestellte Heizeinrichtung 16 ist über Verbindungssäulen 161 mit der zweiten Antriebseinrichtung 10 verbunden. Die Probeaufnahmevorrichtung 1 weist eine Kanüle 1k mit einer fluidal verbundenen Saugeinrichtung (nicht dargestellt) auf. Mittels der Saugeinrichtung kann ein Saugvolumenstrom in der Kanüle erzeugt werden, so dass eine Probe 3 in die Probeaufnahmevorrichtung über die Kanüle 1k aufnehmbar und mit einer definierten Haltekraft haltbar ist. Die dargestellte Heizeinrichtung 16 weist einen gegenüber der Probenkammer 15 abgegrenzten Raum auf, welcher die Heizelemente umfasst. In dem Raum der Heizeinrichtung 16 kann eine Kühlfluidzuführung, beispielsweise über mindestens einen der vorgesehenen Einzelstege 161, erfolgen.

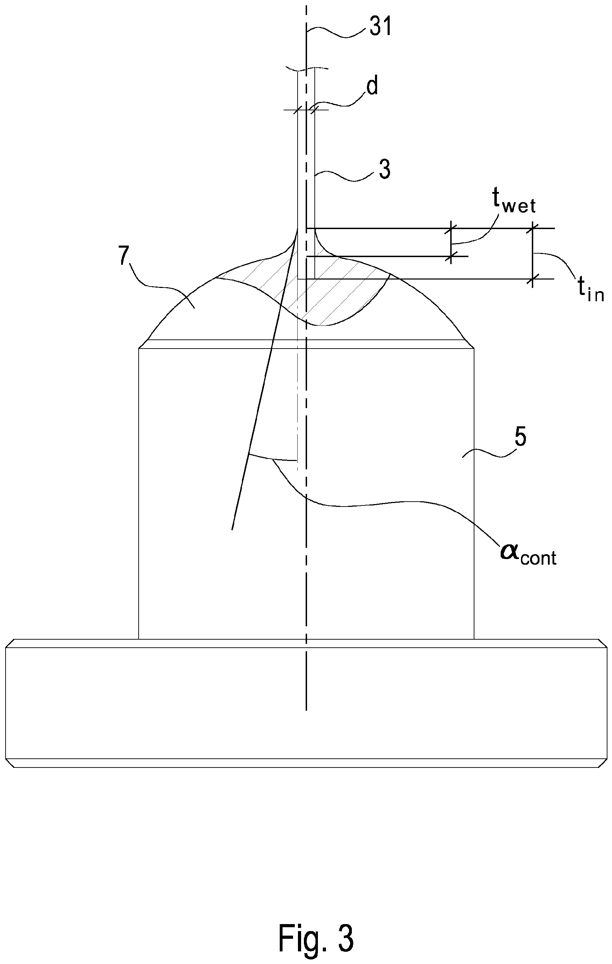

Die Fig. 3 zeigt den vergrößerten Bereich des Tiegels 5 mit einem darin befindlichen, im flüssigen Zustand dargestellten, Einbettwerkstoff, in welchen eine Probe eingetaucht dargestellt ist. Die Probe 3 ist zur besseren Übersichtlichkeit verkürzt dargestellt, so dass lediglich das untere Bereichsende der Probe 3 wiedergegeben ist. Weiterhin ist zur Übersichtlichkeit der Einbettwerkstoff 7 in Teilschnitt dargestellt. In der Fig. 3 weist die Probe 3 einen kreisförmigen Querschnitt (nicht dargestellt) mit einem Durchmesser d auf, die Probe 3 mit der Längsachse 31 ist in einer definierten Tauchtiefe tᵢₙ dargestellt, wobei die Probe 3 durch den Einbettwerkstoff 7 derart benetzt ist, dass sich an der in der Bildebene linken und rechten Seite der Probe 3 sogenannte Menisken bzw. Überhöhungen des Einbettwerkstoffes 7 gegenüber der sonstigen Oberfläche des Einbettwerkstoffes 7 ausbilden. Der auftretende Meniskus weist die Meniskushöhe t_{wet} oberhalb der umgebenden Oberfläche des Einbettwerkstoffes 7 auf. Weiterhin weist der Meniskus einen Benetzungswinkel α_{cont} gegenüber der Faserlängsachse auf.

## Patentansprüche

1. Vorrichtung zur Messung von Probenparametern während eines Einbettvorgangs in einem Einbettwerkstoff (7) mit
- einem Probenhalter (1) zur Halterung einer Probe (3), insbesondere einer Einzelfaser, mit einer Probenlängsachse (31),
- einem Tiegel (5) zur Bereitstellung eines Einbettwerkstoffes (7), und
- einer ersten Antriebseinrichtung (9), mittels derer der Abstand zwischen Probe (3) und Tiegel (5) von einer ersten Position, in welcher die Probe (3) einen Abstand zu dem Einbettwerkstoff (7) aufweist, in eine Einbettposition, in welcher die Probe eine spezifizierte Eintauchtiefe im Einbettwerkstoff (7) aufweist, und umgekehrt, veränderbar ist,
**dadurch gekennzeichnet, dass**
die Vorrichtung weiterhin eine erste elektronische Bildsensoreinheit und eine Auswerteeinrichtung (2) umfasst,
wobei die erste elektronische Bildsensoreinheit (4) zur Aufnahme mindestens eines Bildes des Kontaktbereiches zwischen Probe (3) und Einbettwerkstoff (7) sowie der Probe (3) selbst angeordnet ist und mindestens eines der generierten Bilder an die Auswerteeinrichtung (2) überträgt und die Auswerteeinrichtung (2) aus dem mindestens einen Bild Probenparameter ermittelt.

2. Vorrichtung nach Anspruch 1, **dadurch gekennzeichnet, dass** die erste elektronische Bildsensoreinheit (4) derart angeordnet ist, dass zwischen der optischen Achse (41) der ersten elektronischen Bildsensoreinheit (4) und der Längsachse (31) der Probe (3) ein Winkel (α) im Bereich von 90° +/- 30° eingeschlossen ist.

3. Vorrichtung nach Anspruch 1 oder 2, **dadurch gekennzeichnet, dass** die erste elektronische Bildsensoreinheit (4) eine Ortsauflösung im Bereich von mindestens 2 Pixel je Abmessung der aufzulösenden Probengeometrie, wie insbesondere eines Faserdurchmessers und/oder eine Bildaufnahmerate im Bereich von 0,1 bis 1000 Bilder pro Sekunde, aufweist.

4. Vorrichtung nach einem der vorhergehenden Ansprüche, **dadurch gekennzeichnet, dass** die Auswerteeinrichtung (2) mittels Bildverarbeitung die Konturen der Probe (3) und/oder des Einbettwerkstoffes (7) in dem mindestens einem Bild ermittelt.

5. Vorrichtung nach Anspruch 4, **dadurch gekennzeichnet, dass** mittels der Auswerteeinrichtung (2) aus den Konturen des Einbettwerkstoffes (7) und der Probe (3) der Kontaktwinkel (α_{cont}) zwischen Einbettwerkstoff (7) und Probe (3) und/oder der Durchmesser (d) der Probe (3) ermittelt wird.

6. Vorrichtung nach einem der vorhergehenden Ansprüche, **dadurch gekennzeichnet, dass** die erste Antriebseinrichtung (9) zur Verlagerung der Probe (3) relativ zu dem Tiegel (5) im Bereich des Probenhalters (1) angeordnet ist und/oder mittels einer zweiten Antriebseinrichtung (10) der Tiegel (5) mit dem Einbettwerkstoff (7) relativ zu der Probe (3) verlagerbar ist, wobei eine erste Bewegungsachse (101) eine Verlagerung in Probenlängsachse (31) ermöglicht, bevorzugt eine zweite sowie dritte Bewegungsachse (102, 103) eine Verlagerung orthogonal zu der Probenlängsachse (31) ermöglichen und wobei die zweite und dritte Bewegungsachse (102, 103) besonders bevorzugt untereinander einen Winkel von 90° einschließen.

7. Vorrichtung nach einem der vorhergehenden Ansprüche, **dadurch gekennzeichnet, dass** die Vorrichtung weiterhin eine zweite elektronische Bildsensoreinheit (8) und eine kreisförmige Leuchtfläche (12) umfasst, wobei die optische Achse (121) der kreisförmigen Leuchtfläche (12) und die optische Achse (81) der zweiten elektronischen Bildsensoreinheit (8) jeweils unter einem gleichen Winkel (β, γ) im Bereich von 45° +/- 30° relativ zu der Probenlängsachse (31) einander gegenüberliegend in Richtung des Tiegels (5) angeordnet sind und sich im initialen Kontaktpunt zwischen Probe (3) und Einbettwerkstoff (7) schneiden.

8. Vorrichtung nach einem der vorhergehenden Ansprüche, **dadurch gekennzeichnet, dass** die Vorrichtung weiterhin eine Heizeinrichtung (16) für den Tiegel (5) umfasst, mittels derer der Einbettwerkstoff (7) aufschmelzbar und/oder aushärtbar ist, wobei der Einbettwerkstoff (7) insbesondere auf eine Temperatur von bis zu 500° C aufheizbar ist.

9. Vorrichtung nach einem der vorhergehenden Ansprüche, **dadurch gekennzeichnet, dass** zumindest der Probenhalter (1) und Tiegel (5) von einer Probenkammer (15) umschlossen sind, wobei die Probenkammer (15) zumindest eine in dem Probenhalter (1) gehaltene Probe (3) und den in dem Tiegel (5) aufgenommenen Einbettwerkstoff (7) gegenüber der umgebenden Atmosphäre abgrenzt.

10. Vorrichtung nach einem der vorhergehenden Ansprüche, **dadurch gekennzeichnet, dass** der Probenhalter (1) als Kanüle (1k) mit einer fluidal verbundenen Saugeinrichtung ausgebildet ist.

11. Vorrichtung nach einem der Ansprüche 8 bis 10, **dadurch gekennzeichnet, dass** die Heizeinrichtung (16) über drei Verbindungssäulen (161) mit der ersten oder zweiten Antriebseinrichtung (10) verbunden ist.

12. Vorrichtung nach einem der Ansprüche 9 bis 11, **dadurch gekennzeichnet, dass** die Vorrichtung mindestens eine Zuführöffnung für eine Fluidzuführung in die Probenkammer (15) aufweist, wobei mindestens eine Zuführöffnung bevorzugt die Kanüle (1k) der Probenaufnahme (1) umgibt.

13. Vorrichtung nach einem der Ansprüche 9 bis 12, **dadurch gekennzeichnet, dass** die Heizeinrichtung (16) weiterhin einen gegenüber der Probenkammer (15) abgegrenzten Raum umfasst, welcher die Heizelemente der Heizeinrichtung (16) umgibt.

14. Vorrichtung nach Anspruch 13, **dadurch gekennzeichnet, dass** der Raum der Heizeinrichtung (16) mindestens eine Kühlfluidzuführung und eine Kühlfluidabführung umfasst.

15. Verfahren zur Messung von Probenparametern während eines Einbettvorganges, umfassend die Verfahrensschritte:
- Eintauchen eines Probenkörpers (3) in einen flüssigen Einbettwerkstoff (7) zum Einbetten eines definierten Anteils des Probenkörpers in dem Einbettwerkstoff (7),
- Aushärten des Einbettwerkstoffes (7) durch chemische Reaktion und/oder Änderung der Temperatur des Einbettwerkstoffes (7),
- Generieren von mindestens einem Bild des Kontaktbereiches zwischen Probenkörper und Einbettwerkstoff (7) sowie der Probe (3) selbst mittels einer ersten elektronischen Bildsensoreinheit (4) während des Eintauchvorgangs und/oder während des Aushärtevorganges und/oder bis zum Ende des Aushärtevorgangs, und
- Zuführen des mindestens einen Bildes zu einer Auswerteeinrichtung (2) zur Ermittlung von charakteristischen Probenparametern, wie insbesondere des Probendurchmessers (d) und/oder des Kontaktwinkels (α_{cont}), zwischen Probenkörper (3) und Einbettwerkstoff (7).
